# EUROPÄISCHE PATENTSCHRIFT

(11) **EP 0 779 295 B1**
(45) Veröffentlichungstag und Bekanntmachung des Hinweises auf die Patenterteilung: **20.10.2004**
(21) Anmeldenummer: 96119752.2
(22) Anmeldetag: 10.12.1996
(51) Int. Cl.: C07F 17/00, C08F 10/00, C08F 4/602

(54) **Metallocenverbindung**
Metallocenes
Métallocènes

(30) Priorität: 13.12.1995 DE 19546501
(43) Veröffentlichungstag der Anmeldung: 18.06.1997
(73) Patentinhaber: Basell Polyolefine GmbH, 50389 Wesseling (DE)
(72) Erfinder: Riedel, Michael, Dr., 45130 Essen (DE); Weller, Thomas, Dr., 55130 Mainz (DE); Jacobs, Alexandra, Dr., 65931 Frankfurt (DE); Herrmann, Wolfgang Anton, Prof. Dr., 85354 Freising (DE); Morawietz, Markus, Dr., 63457 Hanau (DE)

(56) Entgegenhaltungen:
- EP-A- 0 498 675
- WO-A-95/27717
- WO-A-95/32979

## Beschreibung

Die vorliegende Erfindung bezieht sich auf eine Metallocenverbindung und ein Verfahren zur Herstellung eines Polyolefins in Gegenwart dieser Metallocenverbindung.

Metallocenverbindungen der 4. Nebengruppe des Periodensystems der Elemente sind in Kombination mit Methylaluminoxan (MAO) aktive Katalysatoren für die Polymerisation von Olefinen. Aus der Literatur ist die Herstellung von Polyolefinen mit löslichen Metallocenverbindungen in Kombination mit Aluminoxanen oder anderen Cokatalysatoren, die aufgrund ihrer Lewis-Acidität das neutrale Metallocen in eine Kation überführen und stabilisieren können, bekannt (EP-A-129 368).

Metallocene und Halbsandwichkomplexe sind nicht nur hinsichtlich der Polymerisation oder Oligomerisation von Olefinen von großem Interesse. Sie können auch als Hydrier-, Epoxidations-, Isomerisierungs-, C-C-Kupplungskatalysatoren eingesetzt werden (Chem. Rev. 1992, 92, 965-994).

Aus der Literatur ist bekannt, daß man CpH mit Zirkonium- oder Hafniumdimethyltetraamid direkt und ohne Zusatz einer Base zu Metallocenen der in EP-A-595 390 und EP-A-283 164 beschriebenen Typen umsetzen kann (J. Chem. Soc. (A), 1968, 1940-1945).

C₂- und Cₛ-symmetrische Metallocenbisamide werden in WO 95/32979 und in EP-A-0 595 390 beschrieben. In EP-A-0 742046 werden Metallocenbisamide der Metalle Chrom, Molybdän und Wolfram offenbart. Es bestand die Aufgabe, eine neue Metallocenverbindung und ein wirtschaftliches Verfahren zur Herstellung von Polyolefinen zur Verfügung zu stellen. Diese Aufgabe wird durch die Metallocenverbindung der vorliegenden Erfindung gelöst.

Die vorliegende Erfindung betrifft somit eine Metallocenverbindung der Formel I, 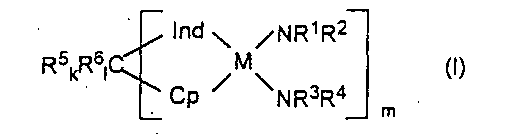 worin Cp eine unsubstituierte oder substituierte Cyclopentadienylgruppe bedeutet, wobei die substituierte Cyclopentadienylgruppe ausgewählt ist aus der Gruppe bestehend aus Tetramethylcyclopentadienyl, Methylcyclopentadienyl, Methyl-tert.butylcyclopentadienyl, Tert.-butylcyclopentadienyl, lsopropylcyclopentadienyl, Dimethylcyclopentadienyl, Trimethylcyclopentadienyl, Trimethylsilylcyclopentadienyl, Trimethylethylcyclopentadienyl, Phenylcyclopentadienyl, Diphenylcyclopentadienyl, Ind unsubstituiertes oder substituiertes Indenyl bedeutet, wobei substituiertes Indenyl ausgewählt ist aus der Gruppe bestehend aus 2-Methylindenyl, 2-Ethylindenyl, 2-Isopropylindenyl, 3-Methylindenyl, 3-tert.-butylindenyl, 3-Trimethylsilylindenyl, 2-Methyl-4-phenylindenyl, 2-Ethyl-4-phenylindenyl, 2-Methyl-4-naphthyl-indenyl, 2-Methyl-4-isopropyl-indenyl, 4,5-Benzoindenyl, 2-Methyl-4,5-benzoindenyl, 2-Methyl-α-acenaphthindenyl, 2-Methyl-4,6-diisopropylindenyl, M Titan, Zirkonium oder Hafnium bedeutet, R¹, R², R³ und R⁴ unabhängig voneinander gleich oder verschieden sind und ein Wasserstoffatom oder einen C₁-C₂₀-Kohlenwasserstoffrest bedeuten, oder M(NR¹R²)(NR³R⁴) für Bis(pyrrolidinamido)-zirkonium steht, R⁵ und R⁶ unabhängig voneinander gleich oder verschieden sind und ein Wasserstoffatom oder einen C₁-C₂₀-Kohlenwasserstoffrest bedeuten und m gleich 1 oder 2 ist, wobei für m gleich 1 k und l gleich 1 sind und für m gleich 2, k und l gleich Null sind.

Bevorzugt bedeutet Ind unsubstituiertes Indenyl.

Die Reste R⁵ und R⁶ sind unabhängig voneinander gleich oder verschieden, bevorzugt gleich, und ein Wasserstoffatom oder ein C₁-C₃₀-Kohlenwasserstoffrest wie C₁-C₂₀-Alkyl oder C₆-C₁₄-Aryl. Bevorzugt sind R⁵ und R⁶ Methyl, Ethyl, Butyl oder Phenyl, insbesondere Methyl.

R¹ und R³ sind unabhängig voneinander gleich oder verschieden ein Wasserstoffatom oder ein C₁-C₂₀-Kohlenwasserstoffrest, bevorzugt ein C₁-C₂₀-Kohlenwasserstoffrest wie C₁-C₂₀-Alkyl oder C₆-C₁₄-Aryl, insbesondere Methyl.

R² und R⁴ sind unabhängig voneinander gleich oder verschieden und bevorzugt ein C₁-C₂₀-Kohlenwasserstoffrest wie C₁-C₂₀-Alkyl oder C₆-C₁₄-Aryl, insbesondere Methyl.

Die Reste R¹, R², R³ und R⁴ sind unabhängig voneinander gleich oder verschieden. Bevorzugt sind die Reste R¹, R², R³ und R⁴ gleich und ein C₁-C₂₀-Kohlenwasserstoffrest wie C₁-C₂₀-Alkyl oder C₆-C₁₄-Aryl, insbesondere Methyl. m ist bevorzugt gleich 1.

Beispiele für Metallocenverbindungen der Formel I sind: Bis(dimethylamido)[η⁵:η⁵-2,2-(cyclopentadienyl)(indenyl)propyliden)]-zirkonium Bis(dimethylamido)[η⁵:η⁵-2,2-(cyclopentadienyl)(indenyl)propyliden)]-hafnium Bis(dimethylamido)[η⁵:η⁵-2,2-(methylcyclopentadienyl)(indenyl)propyliden)]-zirkonium Bis(dimethylamido)[η⁵:η⁵-2,2-(tetramethylcyclopentadienyl)(indenyl)-propyliden)]-zirkonium Bis(dimethylamido)[η⁵:η⁵-2,2-(cyclopentadienyl)(2-methyl-indenyl)propyliden)]-zirkonium Bis(dimethylamido)[η⁵:η⁵-2,2-(cyclopentadienyl)(2-ethyl-indenyl)propyliden)]-zirkonium Bis(dimethylamido)[η⁵:η⁵-2,2-(cyclopentadienyl)(3-trimethylsilyl-indenyl)-propyliden)]-zirkonium Bis(dimethylamido)[η⁵:η⁵-2,2-(methylcyclopentadienyl)(2-methyl-indenyl)-propyliden)]-zirkonium Bis(dimethylamido)[η⁵:η⁵-2,2-(methylcyclopentadienyl)(2-ethyl-indenyl)-propyliden)]-zirkonium Bis(dimethylamido)[η⁵:η⁵-2,2-(methylcyclopentadienyl)(3-trimethylsilyl-indenyl)-propyliden)]-zirkonium

Weitere Beispiele sind die analogen Bis(diethylamido)-, Bis(methylethylamido)- und Bis(pyrrolidinamido)-zirkonverbindungen.

Die erfindungsgemäßen Metallocene sind hochaktive Katalysatorkomponenten für die Olefinpolymerisation. Je nach Substitutionsmuster der Liganden können die Metallocene als Isomerengemisch anfallen. Die Metallocene werden bevorzugt isomerenrein eingesetzt. Die Verwendung des Racemats ist in den meisten Fällen ausreichend.

Verwendet werden kann auch das reine Enantiomere in der (+)- oder (-)-Form. Mit den reinen Enantiomeren ist ein optisch aktives Polymer herstellbar. Getrennt werden sollten jedoch die konfigurationsisomeren Formen der Metallocene, da das polymerisationsaktive Zentrum (das Metallatom) in diesen Verbindungen ein Polymer mit anderen Eigenschaften erzeugt. Für bestimmte Anwendungen, beispielsweise weiche Formkörper, kann dies durchaus wünschenswert sein.

Die Metallocenverbindung der Formel I kann hergestellt werden durch Umsetzung einer Verbindung der Formel II, worin Cp eine unsubstituierte oder substituierte Cyclopentadienylgruppe bedeutet, Ind unsubstituiertes oder substituiertes Indenyl bedeutet, R⁵ und R⁶ unabhängig voneinander gleich oder verschieden sind und ein Wasserstoffatom oder einen C₁-C₂₀-Kohlenwasserstoffrest bedeuten und m gleich 1 oder 2 ist, wobei für m gleich 1 k und l gleich 1 sind und für m gleich 2, k und l gleich Null sind, mit einer Verbindung der Formel III, worin M Titan, Zirkonium oder Hafnium ist, und R¹, R², R³ und R⁴ unabhängig voneinander gleich oder verschieden ein Wasserstoffatom oder einen C₁-C₂₀-Kohlenwasserstoffrest bedeuten. 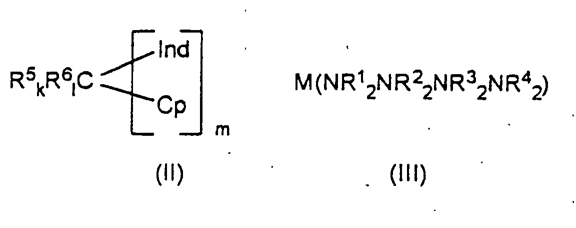 Die Reaktion wird bevorzugt in einem aprotischen Lösungsmittel, z.B. Toluol oder Hexan durchgeführt. Die Temperatur kann zwischen -78 und 140°C betragen, bevorzugt 0°C bis 110°C. Die Verbindung der Formel II kann im Überschuß eingesetzt werden, bevorzugt werden 1 Äquivalent der Verbindung der Formel II und 1 Äquivalent des Metalltetramids der Formel III verwendet.

Verfahren zur Herstellung von Verbindungen der allgemeinen Formel II sind bekannt (Chem. Ber. 1990, 123, 1649-1651). Verfahren zur Herstellung von Verbindungen der allgemeinen Formel III sind ebenfalls bekannt (J. Chem. Soc. 1960, 3857-3861).

Die vorliegende Erfindung betrifft außerdem ein Verfahren zur Herstellung eines Polyolefins durch Polymerisation mindestens eines Olefins in Gegenwart eines Katalysators der mindestens einen Cokatalysator und mindestens eine Metallocenverbindung der Formel I enthält.

Unter dem Begriff Polymerisation wird eine Homopolymerisation wie auch eine Copolymerisation verstanden. Bevorzugt werden in dem erfindungsgemäßen Verfahren eines oder mehrere Olefine der Formel R^{a}-CH = CH-R^{b} polymerisiert, worin R^{a} und R^{b} gleich oder verschieden sind und ein Wasserstoffatom oder einen Kohlenwasserstoffrest mit 1 bis 20 C-Atomen, insbesondere 1 bis 10 C-Atomen, bedeuten, und R^{a} und R^{b} zusammen mit den sie verbindenen Atomen einen oder mehrere Ringe bilden können. Beispiele für solche Olefine sind 1-Olefine mit 2 bis 40, bevorzugt 2 bis 10 C-Atomen, wie Ethylen, Propylen, 1-Buten, 1-Penten, 1-Hexen, 4-Methyl-1-penten oder 1-Octen, Styrol, Diene wie 1,3-Butadien, Isopren, 1,4-Hexadien oder cyclische Olefine. Bevorzugt werden in dem erfindungsgemäßen Verfahren Ethylen oder Propylen homopolymerisiert, oder Ethylen mit einem oder mehreren acyclischen 1-Olefinen mit 3 bis 20 C-Atomen, wie Propylen, und/oder einem oder mehreren Dienen mit 4 bis 20 C-Atomen, wie 1,3-Butadien, copolymerisiert. Beispiele solcher Copolymere sind Ethylen/Propylen-Copolymere und Ethylen/Propylen/1,4-Hexadien-Copolymere.

Die Polymerisation wird bevorzugt bei einer Temperatur von -60 bis 250°C, besonders bevorzugt 50 bis 200°C, durchgeführt. Der Druck beträgt bevorzugt 0,5 bis 2000 bar, besonders bevorzugt 5 bis 64 bar.

Die Polymerisation kann in Lösung, in Masse, in Suspension oder in der Gasphase, kontinuierlich oder diskontinuierlich, ein- oder mehrstufig durchgeführt werden. Eine bevorzugte Ausführungsform ist die Gasphasen- und Lösungspolymerisation.

Bevorzugt enthält der in dem erfindungsgemäßen Verfahren eingesetzte Katalysator eine Metallocenverbindung der Formel I und einen Cokatalysator. Es können auch Mischungen zweier oder mehrerer Metallocenverbindungen eingesetzt werden, z.B. zur Herstellung von Polyolefinen mit breiter oder multimodaler Molmassenverteilung.

Prinzipiell ist als Cokatalysator in dem erfindungsgemäßen Verfahren jede Verbindung geeignet, die aufgrund ihrer Lewis-Acidität das neutrale Metallocen in ein Kation überführen und dieses stabilisieren kann ("labile Koordination"). Darüber hinaus sollte der Cokatalysator oder das aus ihm gebildete Anion keine weiteren Reaktionen mit dem gebildeten Metallocenkation eingehen (EP 427 697). Als Cokatalysator wird bevorzugt eine Aluminiumverbindung und/oder eine Borverbindung verwendet.

Die Borverbindung hat bevorzugt die Formel R⁷ₓNH₄₋ₓBR⁸₄, R⁷ₓPH₄₋ₓBR⁸₄, R⁷₃CBR⁸₄ oder BR⁸₃, worin x eine Zahl von 1 bis 4, bevorzugt 3, bedeutet, die Reste R⁷ gleich oder verschieden, bevorzugt gleich sind, und C₁-C₁₀-Alkyl oder C₆-C₁₈-Aryl sind, oder zwei Reste R⁷ zusammen mit dem sie verbindenen Atomen einen Ring bilden, und die Reste R⁸ gleich oder verschieden, bevorzugt gleich sind, und C₆-C₁₈-Aryl sind, das durch Alkyl, Haloalkyl oder Fluor substituiert sein kann. Insbesondere steht R⁷ für Ethyl, Propyl, Butyl oder Phenyl und R⁸ für Phenyl, Pentafluorphenyl, 3,5-Bistrifluormethylphenyl, Mesityl, Xylyl oder Tolyl (EP-A-277 003, EP-A-277 004 und EP-A-426 638).

Bevorzugt wird als Cokatalysator eine Aluminiumverbindung wie Aluminoxan und/oder ein Aluminiumalkyl eingesetzt.

Besonders bevorzugt wird als Cokatalysator ein Aluminoxan, insbesondere der Formel IVa für den linearen Typ und/oder der Formel IVb für den cyclischen Typ verwendet, 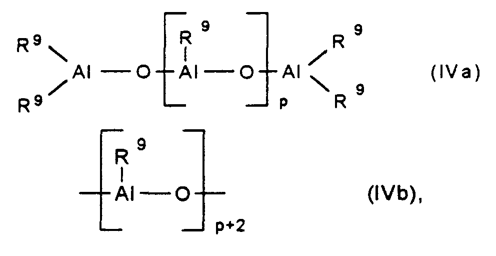 wobei in den Formeln IVa und IVb die Reste R⁹ gleich oder verschieden sind und Wasserstoff oder eine C₁-C₂₀-Kohlenwasserstoffgruppe wie eine C₁-c₁₈-Alkylgrupppe, eine C₆-C₁₈-Arylgruppe oder Benzyl bedeuten, und p eine ganze Zahl von 2 bis 50, bevorzugt 10 bis 35 bedeutet.

Bevorzugt sind die Reste R⁹ gleich und bedeuten Wasserstoff, Methyl, Isobutyl, Phenyl oder Benzyl, besonders bevorzugt Methyl.

Sind die Reste R⁹ verschieden, so sind sie bevorzugt Methyl und Wasserstoff oder alternativ Methyl und Isobutyl, wobei Wasserstoff oder Isobutyl bevorzugt in einem zahlenmäßigen Anteil von 0,01 bis 40 % (der Reste R⁹) enthalten sind.

Die Verfahren zur Herstellung der Aluminoxane sind bekannt. Die genaue räumliche Stuktur der Aluminoxane ist nicht bekannt (J. Am. Chem. Soc. (1993) 115, 4971). Beispielsweise ist denkbar, daß sich Ketten und Ringe zu größeren zweidimensionalen oder dreidimensionalen Strukturen verbinden.

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Es ist möglich, die Metallocenverbindung vor dem Einsatz in der Polymerisationsreaktion mit einem Cokatalysator, insbesondere einem Aluminoxan vorzuaktivieren. Dadurch wird die Polymerisationsaktivität deutlich erhöht. Die Voraktivierung der Metallocenverbindung wird vorzugsweise in Lösung vorgenommen. Bevorzugt wird dabei die Metallocenverbindung in einer Lösung des Aluminoxans in einem inerten Kohlenwasserstoff aufgelöst. Als inerter Kohlenwasserstoff eignet sich ein aliphatischer oder aromatischer Kohlenwasserstoff. Bevorzugt wird Toluol verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösungsmenge. Das Metallocen kann in der gleichen Konzentration eingesetzt werden, vorzugsweise wird es jedoch in einer Menge von 10⁻⁴ bis 1 mol pro mol Aluminoxan eingesetzt. Die Voraktivierungsdauer beträgt 5 Minuten bis 60 Stunden, vorzugsweise 5 bis 60 Minuten. Man arbeitet bei einer Temperatur von -78 bis 100°C, vorzugsweise 0 bis 80°C.

Die Metallocenverbindung wird bevorzugt in einer Konzentration, bezogen auf das Übergangsmetall, von 10⁻³ bis 10⁻⁸, vorzugsweise 10⁻⁴ bis 10⁻⁷ mol Übergangsmetall pro dm³ Lösemittel bzw. pro dm³ Reaktorvolumen angewendet. Das Aluminoxan, wird bevorzugt in einer Konzentration von 10⁻⁶ bis 10⁻¹ mol, vorzugsweise 10⁻⁵ bis 10⁻² mol pro dm³ Lösemittel bzw. pro dm³ Reaktorvolumen verwendet. Die anderen genannten Cokatalysatoren werden in etwa äquimolaren Mengen zu der Metallocenverbindung verwendet. Prinzipiell sind aber auch höhere Konzentrationen möglich.

Das Aluminoxan kann auf verschiedene Arten nach bekannten Verfahren hergestellt werden. Eine der Methoden ist beispielsweise, daß eine Aluminiumkohlenwasserstoffverbindung und/oder ein Hydridoaluminiumkohlenwasserstoffverbindung mit Wasser (gasförmig, fest, flüssig oder gebunden - beispielsweise als Kristallwasser) in einem inerten Lösungsmittel (wie beispielsweise Toluol) umgesetzt wird. Zur Herstellung eines Aluminoxans mit verschiedenen Resten R²⁴ werden beispielsweise entsprechend der gewünschten Zusammensetzung zwei verschiedene Aluminiumtrialkyle mit Wasser umgesetzt.

Zur Entfernung von im Olefin vorhandenen Katalysatorgiften ist eine Reinigung mit einer Aluminiumverbindung, bevorzugt einem Aluminiumalkyl, wie Trimethylaluminium oder Triethylaluminium, vorteilhaft. Diese Reinigung kann sowohl im Polymerisationssystem selbst erfolgen, oder das Olefin wird vor der Zugabe in das Polymerisationssystem mit der Aluminiumverbindung in Kontakt gebracht und anschließend wieder abgetrennt.

Als Molmassenregler und/oder zur Steigerung der Katalysatoraktivität kann in dem erfindungsgemäßen Verfahren Wasserstoff zugegeben werden. Hierdurch können niedermolekulare Polyolefine wie Wachse erhalten werden.

Bevorzugt wird in dem erfindungsgemäßen Verfahren die Metallocenverbindung mit dem Cokatalysator außerhalb des Polymerisationsreaktors in einem separaten Schritt unter Verwendung eines geeigneten Lösemittels umgesetzt. Dabei kann eine Trägerung vorgenommen werden.

In dem erfindungsgemäßen Verfahren kann mit Hilfe der Metallocenverbindung eine Vorpolymerisation erfolgen. Zur Vorpolymerisation wird bevorzugt das (oder eines der) in der Polymerisation eingesetzte(n) Olefin(e) verwendet.

Der in dem erfindungsgemäßen Verfahren eingesetzte Katalysator kann geträgert sein. Durch die Trägerung läßt sich beispielsweise die Kornmorphologie des hergestellten Polyolefins steuern. Dabei kann die Metallocenverbindung zunächst mit dem Träger und anschließend mit dem Cokatalysator umgesetzt werden. Es kann auch zunächst der Cokatalysator geträgert werden und anschließend mit der Metallocenverbindung umgesetzt werden. Auch ist es möglich das Reaktionsprodukt von Metallocenverbindung und Cokatalysator zu trägern. Geeignete Trägermaterialien sind beispielsweise Silikagele, Aluminiumoxide, festes Aluminoxan oder andere anorganische Trägermaterialien wie beispielsweise Magnesiumchlorid. Ein geeignetes Trägermaterial ist auch ein Polyolefinpulver in feinverteilter Form. Die Herstellung des geträgerten Cokatalysators kann beispielsweise wie in EP-A-567 952 beschrieben durchgeführt werden.

Vorzugsweise wird der Cokatalysator, z.B. Aluminoxan, auf einen Träger wie beispielsweise Silikagele, Aluminiumoxide, festes Aluminoxan, andere anorganische Trägermaterialien oder auch ein Polyolefinpulver in feinverteilter Form aufgebracht und dann mit dem Metallocen umgesetzt.

Als anorganische Träger können Oxide eingesetzt werden, die flammenpyrolytisch durch Verbrennung von Element-Halogeniden in einer Knallgas-Flamme erzeugt wurden, oder als Kieselgele in bestimmten Korngrößen-Verteilungen und Kornformen herstellbar sind.

Die Herstellung des geträgerten Cokatalysators kann beispielsweise wie in EP-A-578 838 beschrieben in der folgenden Weise in einem Edelstahl-Reaktor in explosionsgeschützter Ausführung mit einem Umpumpsystem der Druckstufe 60 bar, mit Inertgasversorgung, Temperierung durch Mantelkühlung und zweitem Kühlkreislauf über einen Wärmetauscher am Umpumpsystem erfolgen. Das Umpumpsystem saugt den Reaktorinhalt über einen Anschluß im Reaktorboden mit einer Pumpe an und drückt ihn in einen Mischer und durch eine Steigleitung über einen Wärmetauscher in den Reaktor zurück. Der Mischer ist so gestaltet, daß sich in dem Zulauf ein verengter Rohrquerschnitt befindet, wo eine erhöhte Strömungsgeschwindigkeit entsteht, und in dessen Turbulenzzone axial und entgegen der Strömungsrichtung eine dünne Zuleitung geführt ist, durch welche - getaktet - jeweils eine definierte Menge Wasser unter 40 bar Argon eingespeist werden kann. Die Kontrolle der Reaktion erfolgt über einen Probennehmer am Umpumpkreislauf. Im Prinzip sind jedoch auch andere Reaktoren geeignet.
Weitere Möglichkeiten der Herstellung eines geträgerten Cokatalysators sind in EP-A-578 838 beschrieben. Danach wird das erfindungsgemäße Metallocen auf den geträgerten Cokatalysator aufgebracht, indem das gelöste Metallocen mit dem geträgerten Cokatalysator gerührt wird. Das Lösemittel wird entfernt und durch einen Kohlenwasserstoff ersetzt, in dem sowohl Cokatalysator als auch das Metallocen unlöslich sind.

Die Reaktion zu dem geträgerten Katalysatorsystem kann bei einer Temperatur von -20 bis + 120°C, bevorzugt 0 bis 100°C, besonders bevorzugt bei 15 bis 40°C erfolgen. Das Metallocen wird mit dem geträgerten Cokatalysator in der Weise umgesetzt, daß der Cokatalysator als Suspension mit 1 bis 40 Gew.-%, bevorzugt mit 5 bis 20 Gew.-% in einem aliphatischen, inerten Suspensionsmittel wie n-Decan, Hexan, Heptan, Dieselöl mit einer Lösung des Metallocens in einem inerten Lösungsmittel wie Toluol, Hexan, Heptan, Dichlormethan oder mit dem feingemahlenen Feststoff des Metallocens zusammengebracht wird. Umgekehrt kann auch eine Lösung des Metallocens mit dem Feststoff des Cokatalysators umgesetzt werden.

Die Umsetzung erfolgt durch intensives Mischen, beispielsweise durch Verrühren bei einem molaren Al/M¹-Verhältnis von 100/1 bis 10000/1, bevorzugt von 100/1 bis 3000/1 sowie einer Reaktionszeit von 5 bis 120 Minuten, bevorzugt 10 bis 60 Minuten, besonders bevorzugt 10 bis 30 Minuten unter inerten Bedingungen.
Im Laufe der Reaktionszeit zur Herstellung des geträgerten Katalysatorsystems treten insbesondere bei der Verwendung der erfindungsgemäßen Metallocene mit Absorptionsmaxima im sichtbaren Bereich Veränderungen in der Farbe der Reaktionsmischung auf, an deren Verlauf sich der Fortgang der Reaktion verfolgen läßt.

Nach Ablauf der Reaktionszeit wird die überstehende Lösung abgetrennt, beispielsweise durch Filtration oder Dekantieren. Der zurückbleibende Feststoff wird 1- bis 5-mal mit einem inerten Suspensionsmittel wie Toluol, n-Decan, Hexan, Dieselöl, Dichlormethan zur Entfernung löslicher Bestandteile im gebildeten Katalysator, insbesondere zur Entfernung von nicht umgesetzten und damit löslichem Metallocen, gewaschen.

Das so hergestellte geträgerte Katalysatorsystem kann im Vakuum getrocknet als Pulver oder noch Lösemittel behaftet wieder resuspendiert und als Suspension in einem der vorgenannten inerten Suspensionsmittel in das Polymerisationssystem eindosiert werden.

Wenn die Polymerisation als Suspensions- oder Lösungspolymerisation durchgeführt wird, wird ein für das Ziegler-Niederdruckverfahren gebräuchliches inertes Lösemittel verwendet. Beispielsweise arbeitet man in einem aliphatischen oder cycloaliphatischen Kohlenwasserstoff; als solcher sei beispielsweise Propan, Butan, Hexan, Heptan, Isooctan, Cyclohexan, Methylcyclohexan, genannt. Weiterhin kann eine Benzin- bzw. hydrierte Dieselölfraktion benutzt werden. Brauchbar ist auch Toluol. Bevorzugt wird im flüssigen Monomeren polymerisiert.

Vor der Zugabe des Katalysators, insbesondere des geträgerten Katalysatorsystems (enthaltend das erfindungsgemäße Metallocen und einen geträgerten Cokatalysator) kann zusätzlich eine Aluminiumalkylverbindung wie beispielsweise Trimethylaluminium, Triethylaluminium, Triisobutylaluminium, Trioctylaluminium oder Isoprenylaluminium zur Inertisierung des Polymerisationssystems (beispielsweise zur Abtrennung vorhander Katalysatorgifte im Olefin) in den Reaktor gegeben werden. Diese wird in einer Konzentration von 100 bis 0,01 mmol Al pro kg Reaktorinhalt dem Polymerisationssystem zugesetzt. Bevorzugt sind Triisobutylaluminium und Triethylaluminium in einer Konzentration von 10 bis 0,1 mmol Al pro kg Reaktorinhalt. Dadurch kann bei der Synthese eines geträgerten Katalysatorsystems das molare Al/M¹-Verhältnis klein gewählt werden.

Werden inerte Lösemittel verwendet, werden die Monomeren gasförmig oder flüssig zudosiert.

Die Dauer der Polymerisation ist beliebig, da das in dem erfindungsgemäßen Verfahren zu verwendende Katalysatorsystem einen nur geringen zeitabhängigen Abfall der Polymerisationsaktivität zeigt.

Die in der vorliegenden Erfindung beschriebene spezielle Metallocenverbindung eignet sich zur Herstellung von Polyolefinen.

Durch Anwendung von Wasserstoff oder durch Erhöhung der Polymerisationstemperatur sind Polyolefine niedriger Molmasse, wie Wachse zugänglich, deren Härte oder Schmelzpunkt durch den Comonomergehalt variiert werden können.

Umgekehrt lassen sich durch Wahl der Polymerisationsbedingungen auch hochmolekulare Polyolefine herstellen, welche als thermoplastische Werkstoffe geeignet sind. Diese sind insbesondere zur Herstellung von Formkörpern wie Folien, Platten oder Großhohlkörpern (z.B. Rohre) geeignet.

Durch Wahl des Polymerisations-Verfahrens und der Comonomerart(en), sowie Comonomermenge(n) lassen sich Olefincopolymere z.B. Ethylen/Propylen/1,4-Hexadien-Terpolymere herstellen.

### Beispiele

### Beispiel 1

### Bis(dimethylamido)[η⁵:η⁵-2,2-(cyclopentadienyl)(indenyl)propyliden]-zirkonium

416 mg (1,55 mmol) [Zr(NMe₂)₄] werden in 25 ml Toluol gelöst und bei -78°C mit 345 mg (1,55 mmol) 2-Cyclopentadienyl-2-indenyl-propan versetzt. Anschließend erwärmt sich die Mischung unter Rühren auf Raumtemperatur. Nach 12 h wird für 3 h auf 80°C erhitzt. Flüchtige Stoffe werden im Ölpumpenvakuum entfernt. 613 mg (1,53 mmol, 99 %) Bis(dimethylamido) [η⁵:η⁵-2,2-(cyclopentadienyl)(indenyl)propyliden]-zirkonium bleiben als orangefarbener Feststoff zurück.

### Analytik:

¹H-NMR (400 MHz, C₆D₆, 25°C): [ppm] δ = 1.57, 1.89 (s,6H; C(CH₃)₂), 2.46, 2.81 (s, 12H; N(CH₃)₂), 5.29 (q, 1H, ³J(H,H) = 2.4 Hz; olefin. CH in C₅H₄), 5.80 (m, 2H; olefin. CH in C₅H₄ und C₉H₇), 5.99 (q, 1H. ³J(H,H) = 2,4 Hz; olefin. CH in C₅H₄), 6.08 (q, 1H, ³J(H,H) = 1.8 Hz; olefin. CH in C₅H₄), 6.59 (d, 1H, ³J(H,H) = 3.0 Hz; olefin. CH in C₉H₇), 6.69 (dd, 1H, ³J(H,H) = 6.7 Hz; olefin. CH in C₉H₇), 6.87 (dd, 1H, ³J(H,H) = 6.7 Hz; olefin CH in C₉H₇), 7,49 (d, 1H, ³J(H,H) = 7.9 Hz; olefin CH in C₉H₇), 7.62 (d, 1H, ³J(H,H) = 7.9 Hz; olefin CH in C₉H₇).

¹³C{¹H}-NMR (100.5 MHz, C₆D₆, 25°C): [ppm] δ = 26.2, 26.7 (s; C(CH₃)₂), 38.1 (s; C(CH₃)₂), 47.2, 48.3 (s; N(CH₃)₂), 102.2, 102.2, 102.8, 107.8, 109.6 (s; olefin. CH), 111.8 (s; olefin C), 114.3 (s; olefin. CH), 118.2 (s; olefin C), 122.7, 123.2, 123.6, 125.7 (s; aromat. CH).

¹³C-NMR (100.5 MHz, C₆D₆, 25°C): [ppm] δ = 26.2, 26.7 (q, ¹J(C,H) = 132.0 Hz; C(CH₃)₂), 38.1 (s; C(CH₃)₂), 47.2 (q, ¹J(C,H) = 125.9 Hz; N(CH₃)₂), 48.3 (q, ¹J(C,H) = 125.8 Hz; N(CH₃)₂), 102.0 (d, ¹J(C,H) = 167.3 Hz; olefin. CH), 102.2 (d, ¹J(C,H) = 176.0 Hz; olefin. CH), 102.8 (d, ¹J(C,H) = 172.5 Hz; olefin. CH), 107.8 (d, ¹J(C,H) = 170.0 Hz; olefin. CH), 109.6 (d, ¹J(C,H) = 164.1 Hz; olefin. CH), 111.8 (s; olefin. C), 114.3 (d, ¹J(C,H) = 170.9 Hz; olefin. CH), 118.2 (s; olefin. C), 122.7 (d, ¹J(C,H) = 166.0 Hz; aromat. CH), 123.2 (d, ¹J(C,H) = 160.0; aromat. CH), 123.6 (d, ¹J(C,H) = 159.1 Hz; aromat. CH), 125.7 (d, ¹J(C,H) = 162.0 Hz; aromat. CH).

MS (Cl): m/z (%) = 708 (10) [2M⁺-2NMe₂], 398 (100) [M⁺], 355 (45) [M⁺-NMe₂], 311 (21) [M⁺-2NMe₂].

### Beispiel 2

### Bis(dimethylamido)[η⁵:η⁵-2,2-(cyclopentadienyl)(indenyl)propyliden]-hafnium

833 mg (2,35 mmol) [Hf(NMe₂)₄] werden in 30 ml p-Xylol gelöst und bei -78°C mit 522 mg (2,35 mmol) 2-Cyclopentadienyl-2-indenyl-propan versetzt. Anschließend erwärmt sich die Mischung unter Rühren auf Raumtemperatur nach 2 h wird für 8 h auf 80°C erhitzt. Flüchtige Stoffe werden im Ölpumpenvakuum entfernt. Der so erhaltene orangefarbene Feststoff wird aus wenig Pentan umkristallisiert. Man erhält 1,19 g (2.23 mmol, 95 %) Bis(dimethylamido)[η⁵:η⁵-2,2-(cyclopentadienyl)(indenyl)propyliden]-hafnium als orangefarbenen Feststoff.

### Analytik:

¹H-NMR (400 MHz, C₆D₆, 25°C): [ppm] δ = 1.57, 1.88 (s, 6H; C(CH₃)₂), 2.51, 2.85 (s, 12H; N(CH₃)₂), 5.29 ("q", 1H; olefin. CH in C₅H₄), 5.70 - 5.80 (m, 2H; olefin. CH in C₅H₄ und C₉H₇), 6.00 (m, 1H; olefin CH in C₅H₄), 6.04 (m, 1H; olefin CH in C₅H₄), 6.53 (d, 1H; ³J(H,H) = 3.0 Hz; olefin. CH in C₉H₇), 6.71 (t, 1 H, ³J(H,H) = 6.7 Hz; olefin CH in C₉H₇), 6.87 (t, 1H, ³J(H,H) = 7.0 Hz; olefin. CH in C₉H₇), 7.49 (d, 1H, ³J(H,H) = 7.9 Hz; olefin. CH in C₉H₇), 7.63 (d, 1H, ³J(H,H) = 8.6 Hz; olefin. CH in C₉H₇).

¹³C{¹H}-NMR (100.5 MHz, C₆D₆, 15°C): [ppm] δ = 26.3, 26.8 (s; C(CH₃)₂), 38.2 (s; C(CH₃)₂), 47.2 (s; N(CH₃)₂), 100.6, 101.1, 101.8, 107.2, 108.6 (s; olefin. CH), 111.7 (s; olefin C), 113.6 (s; olefin CH), 117.9 (s; olefin. C), 122.7, 123.3, 123.9, 125.7 (s; aromat. CH).

MS (Cl): m/z (%) =620 (100), 600 (18), 512 (24), 497 (28), 442 (17), 399 (25), 222 (26), 207 (26), 115 (8), 107 (20).

## Patentansprüche

1. Metallocenverbindung der Formel 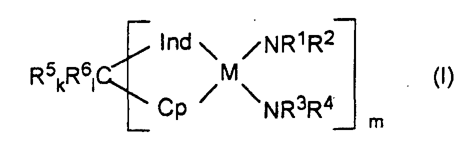 worin Cp eine unsubstituierte oder substituierte Cyclopentadienylgruppe bedeutet, wobei die substituierte Cyclopentadienylgruppe ausgewählt ist aus der Gruppe bestehend aus Tetramethylcyclopentadienyl, Methylcyclopentadienyl, Methyl-tert.butylcyclopentadienyl, Tert.-butylcyclopentadienyl, Isopropylcyclopentadienyl, Dimethylcyclopentadienyl, Trimethylcyclopentadienyl, Trimethylsilylcyclopentadienyl, Trimethylethylcyclopentadienyl, Phenylcyclopentadienyl, Diphenylcyclopentadienyl, Ind unsubstituiertes oder substituiertes Indenyl bedeutet, wobei substituiertes Indenyl ausgewählt ist aus der Gruppe bestehend aus 2-Methylindenyl, 2-Ethylindenyl, 2-Isopropylindenyl, 3-Methylindenyl, 3-tert.-butylindenyl, 3-Trimethylsilylindenyl, 2-Methyl-4-phenylindenyl, 2-Ethyl-4-phenylindenyl, 2-Methyl-4-naphthyl-indenyl, 2-Methyl-4-isopropyl-indenyl, 4,5-Benzoindenyl, 2-Methyl-4,5-benzoindenyl, 2-Methyl-α-acenaphthindenyl, 2-Methyl-4,6-diisopropylindenyl,
M Titan, Zirkonium oder Hafnium bedeutet, R¹, R², R³ und R⁴ unabhängig voneinander gleich oder verschieden sind und ein Wasserstoffatom oder einen C₁-C₂₀-Kohlenwasserstoffrest bedeuten, oder M(NR¹R²)(NR³R⁴) für Bis(pyrrolidinamido)-zirkonium steht, R⁵ und R⁶ unabhängig voneinander gleich oder verschieden sind und ein Wasserstoffatom oder einen C₁-C₂₀-Kohlenwasserstoffrest bedeuten und m gleich 1 oder 2 ist, wobei für m gleich 1 k und I gleich 1 sind und für m gleich 2, k und l gleich Null sind.

2. Katalysator, enthaltend mindestens eine Metallocenverbindung der Formel I gemäß Anspruch 1 und mindestens einen Cokatalysator.

3. Katalysator gemäß Anspruch 2, worin als Cokatalysator eine Aluminiumverbindung und/oder eine Borverbindung verwendet wird.

4. Katalysator gemäß Anspruch 2 oder 3, zusätzlich enthaltend einen Träger.

5. Katalysator gemäß einem oder mehreren der Ansprüche 2 bis 4, worin die Metallocenverbindung der Formel I vorpolymerisiert ist.

6. Verfahren zur Herstellung eines Polyolefins durch Polymerisation mindestens eines Olefins in Gegenwart eines Katalysators gemäß einem oder mehreren der Ansprüche 2 bis 5.

7. Polyolefin, herstellbar nach dem Verfahren gemäß Anspruch 6.

8. Formteil, enthaltend ein Polyolefin gemäß Anspruch 7.

9. Verwendung einer Metallocenverbindung der Formel I gemäß Anspruch 1, zur Olefinpolymerisation.

10. Verwendung eines Katalysators gemäß einem oder mehreren der Ansprüche 2 bis 5, zur Olefinpolymerisation.

## Claims

1. A metallocene compund of the formula I 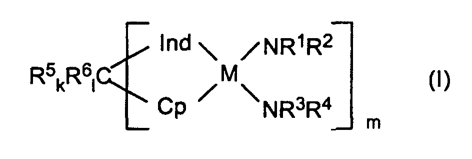 where Cp is an unsubstituted or substituted cyclopentadienyl group, with the substituted cyclopentadienyl group being selected from the group consisting of tetramethylcyclopentadienyl, methylcyclopentadienyl, methyl-tert-butylcyclopentadienyl, tert-butylcyclopentadienyl, isopropylcyclopentadienyl, dimethylcyclopentadienyl, trimethylcyclopentadienyl, trimethylsilylcyclopentadienyl, trimethylethylcyclopentadienyl, phenylcyclopentadienyl, diphenylcyclopentadienyl, Ind is unsubstituted or substituted indenyl, with substituted indenyl being selected from the group consisting of 2-methylindenyl, 2-ethylindenyl, 3-methylindenyl, 3-tert-butylindenyl, 3-trimethylsilylindenyl, 2-methyl-4-phenylindenyl, 2-ethyl-4-phenylindenyl, 2-methyl-4-naphthylindenyl, 2-methyl-4-isopropylindenyl, 4,5-benzoindenyl, 2-methyl-4,5-benzoindenyl, 2-methyl-α-acenaphthindenyl, 2-methyl-4,6-diisopropylindenyl, M is titanium, zirconium or hafnium, R¹, R², R³ and R⁴ are, independently of one another, identical or different and are each a hydrogen atom or a C₁-C₂₀-hydrocarbon radical, or M(NR¹R²)(NR³R⁴) is bis(pyrrolidinamido)zirconium, R⁵ and R⁶ are, independently of one another, identical or different and are each a hydrogen atom or a C₁-C₂₀-hydrocarbon radical, m is 1 or 2 and k and I are 1 when m is 1 and k and I are zero when m is 2.

2. A catalyst comprising at least one metallocene compound of the formula I as claimed in claim 1 and at least one cocatalyst.

3. A catalyst as claimed in claim 2, wherein the cocatalyst used is an aluminum compound and/or a boron compound.

4. A catalyst as claimed in claim 2 or 3, further comprising a support.

5. A catalyst as claimed in one or more of claims 2 to 4, wherein the metallocene compound of the formula I is prepolymerized.

6. A process for preparing a polyolefin by polymerizing at least one olefin in the presence of a catalyst as claimed in one or more of claims 2 to 5.

7. A polyolefin able to be prepared by the process as claimed in claim 6.

8. A shaped part comprising a polyolefin as claimed in claim 7.

9. The use of a metallocene compound of the formula I as claimed in claim 1 for olefin polymerization.

10. Use of a catalyst as claimed in one or more of claims 2 to 5 for olefin polymerization.

## Revendications

1. Composé de métallocène de formule I 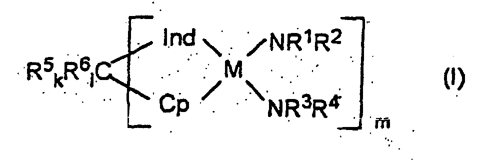 où Cp désigne un groupe cyclopentadiényle non-substitué ou substitué, tandis que le groupe cyclopentadiényle substitué est choisi dans le groupe consistant en tétraméthylcyclopentadiényle, méthylcyclopentadiényle, méthyl-tert-butylcyclopentadiényle, tert-butylcyclopentadiényle, isopropylcyclopentadiényle, diméthylcyclo-pentadiényle, triméthylcyclopentadiényle, triméthylsilylcyclopenta-diényle, triméthyléthylcyclopentadiényle, phénylcyclopentadiényle, diphénylcyclopentadiényle,
Ind représente un indényle non-substitué ou susbtitué, tandis que l'indényle substitué est choisi dans le groupe consistant en 2-méthyl-indényle, 2-éthylindényle, 2-isopropylindényle, 3-méthylindényle, 3-tert-butylindényle, 3-triméthylsilylindényle, 2-méthyl-4-phényl-indényle, 2-éthyl-4-phénylindényle, 2-méthyl-4-néphtyl-indényle, 2-méthyl-4-isopropylindényle, 4,5-benzoindényle, 2-méthyl-4,5-benzo-indényle, 2-méthylavénaphtindényle, 2-méthyl-4,6-diisopropyl-indényle,
M désigne le titane, le zirconium ou le hafnium,
R¹, R², R³ et R⁴ sont, indépendamment l'un de l'autre, identiques ou différents et représentent un atome d'hydrogène ou un reste hydrocarboné en C₁-C₂₀, ou M(NR¹R²)(NR³R⁴) désigne le bis(pyrrolidinamido)-zirconium,
R⁵ et R⁶ sont, indépendamment l'un de l'autre, identiques ou différents et représentent un atome d'hydrogène ou un reste hydrocarboné en C₁-C₂₀, et
m vaut 1 ou 2, tandis que pour = 1 k et 1 valent 1 et pour m = 2 k et 1 sont tous deux zéro.

2. Catalyseur, contenant au moins un composé de métallocène de formule I selon la revendication 1 et au moins un cocatalyseur.

3. Catalyseur selon la revendication 2, dans lequel on utilise comme cocatalyseur un composé d'aluminium et/ou un composé de bore.

4. Catalyseur selon la revendication 2 ou 3, contenant en outre un support.

5. Catalyseur selon l'une ou plusieurs des revendications 2 à 4, dans lequel le composé de métallocène de formule I est prépolymérisé.

6. Procédé pour la préparation d'une polyoléfine par polymérisation d'au moins une oléfine en présence d'un catalyseur selon l'une ou plusieurs des revendications 2 à 5.

7. Polyoléfine, pouvant être préparée conformément au procédé selon la revendication 6.

8. Pièce moulée, contenant une polyoléfine selon la revendication 7.

9. Utilisation d'un composé de métallocène de formule I selon la revendication 1 pour la polymérisation d'oléfines.

10. Utilisation d'un catalyseur selon l'une ou plusieurs des revendications 2 à 5 pour la polymérisation d'oléfines.
